# EUROPEAN PATENT SPECIFICATION

(11) **EP 2 254 403 B1**
(45) Date of publication and mention of the grant of the patent: **05.11.2014**
(21) Application number: 09718288.5
(22) Date of filing: 06.03.2009
(51) Int. Cl.: A01K 5/00

(54) **A METHOD FOR PREPARING A BATCH OF ANIMAL FEED FROM A PLURALITY OF INGREDIENTS**
VERFAHREN FÜR DIE ZUBEREITUNG EINER TIERFUTTERCHARGE AUS MEHREREN BESTANDTEILEN
PROCÉDÉ DE PRÉPARATION D'UN MÉLANGE D'ALIMENTS POUR ANIMAUX À PARTIR D'UNE PLURALITÉ D'INGRÉDIENTS

(30) Priority: 06.03.2008 IE 20080172; 03.12.2008 IE 20080961
(43) Date of publication of application: 01.12.2010
(73) Proprietor: Salford Engineering Limited, County Carlow (IE)
(72) Inventor: McCURDY, John Joseph, County Kilkenny (IE); O'NEILL, Oliver Thomas, County Carlow (IE); Mc NAB KERR, Hugh, Perth PH1 4HL (GB); EON, Jerome, Jean-Yves, 35720 Saint-Pierre-de-Plesguen (FR); WAREING, Seth Daniel, lngleby Barwick Stockton on Tees TS 17 5BX (GB); PENFARE, Timothy John, County Tipperary (IE)
(74) Representative: Gorman, Francis Fergus
(86) International application number: PCT/IE2009/000006
(87) International publication number: WO 2009/109953

(56) References cited:
- EP-A- 0 931 454
- IE-A2- 960 301
- US-A1- 2002 101 781

## Description

The present invention relates to a method for preparing a batch of animal feed from a plurality of ingredients.

Mixer/feeder apparatus, in particular mixer/feeder wagons, are commonly used for preparing batches of animal feed from ingredients. Typical mixer/feeder wagons are disclosed in PCT Published Application Specification No. WO 96/32836 and British Patent Specification No. 2,139,911. The advantage of preparing a batch of animal feed in such mixer/feeder wagons is that once prepared, the mixer/feeder wagon can be trailed to the location at which the prepared animal feed is to be dispensed to the animals. Typically, where animals are housed in an intensive rearing unit, the animal feed may be dispensed along a longitudinally extending trough which is accessible by the animals. In the preparation of animal feed it is important to avoid both over-mixing and under-mixing of the animal feed in such mixer/feeder wagons. Under-mixing of the animal feed results in inadequate mixing of the feed, and thereby allows animals to pick and choose the ingredients from the under-mixed batch of animal feed. For example, the animals may pick the tasty bits of the animal feed, while leaving the not so tasty bits. This is undesirable, since it can lead to undernourishment and underperformance of the animal, particularly from the point of view of weight gain, in the case of beef cattle, and milk yield in the case of milking cows. Under-mixing of the ingredients in mixer/feeder wagons of the type disclosed in PCT Published Application Specification No. WO 96/32836 can also result in the fibres of the fibrous ingredients being inadequately chopped, and thus being of excessive lengths, which may be such that the fibrous ingredients fail to stimulate optimum digestion of the nutrients of the animal feed in the animal's stomach. This, in turn, leads to inefficient conversion of the animal feed to weight gain in the case of beef cattle, and to inefficient conversion to milk in the case of milking cows.

Over-mixing of animal feed is also problematical, in that it can result in deterioration of the animal feed, in particular, deterioration of the fibrous ingredients of the feed. This, in turn, can similarly result in inefficient conversion of the animal feed to weight gain, in the case of beef cattle, and inefficient conversion to milk in the case of milking cows. Over-mixing of the fibrous ingredients can result in deterioration of the structure of the fibrous ingredients, and can also result in excessive reduction in the lengths of the fibres of the fibrous ingredients. This is particularly so in the case of mixer/feeder wagons of the type disclosed in PCT Published Application Specification No. WO 96/32836- It has been found that any deterioration in the structure of the fibrous ingredients and any reduction in the length of the fibres of the fibrous ingredients below predefined minimum lengths, depending on the fibrous ingredient, reduces the properties of the fibrous ingredients to stimulate optimum digestion of the nutrients of the animal feed in the animal's stomach. Any reduction in the digestion of nutrients in animal feed leads to inefficient conversion of the animal feed by the animal to weight gain in the case of beef cattle or to milk yield in the case of milking cows.

European Patent Specification No. 0,931,454 of Osterlund discloses apparatus for the comminution and mixing of feedstuff components for animal feeds. The apparatus comprises a mixing compartment having a mixing rotor rotatably mounted therein. The method for mixing feedstuff components includes initially loading the feedstuff components which are most coarse into the mixing compartment, and then subsequently loading the remaining feedstuff components for mixing thereof.

There is therefore a need for a method for preparing a batch of animal feed from a plurality of ingredients which overcomes this problem.

The present invention is directed towards providing such a method.

According to the invention there is provided a method for preparing a batch of animal feed from a plurality of ingredients requiring respective predefined mixing periods during a mixing cycle in a mixer/feeder apparatus of the type comprising a mixing compartment within which a mixing rotor is rotatably mounted for mixing the ingredients therein, the method comprising:
selecting the ingredient requiring the largest predefined mixing period, and determining the duration of the mixing cycle as the predefined mixing period required by the selected ingredient requiring the largest predefined mixing period
determining a plurality of instants at which the respective remaining ingredients are to be loaded into the mixing compartment of the mixer/feeder apparatus during the mixing cycle, each instant of the respective determined instants being determined so that the remaining duration of the mixing cycle at that instant is substantially equal to the predefined mixing period of the corresponding ingredient,
loading the selected ingredient with the largest predefined mixing period into the mixing compartment at the commencement of the mixing cycle, and
sequentially loading the remaining ingredients into the mixing compartment at respective corresponding determined instants during the mixing cycle.

Preferably, the commencement of the mixing cycle is determined as being the commencement of loading of the ingredient requiring the largest predefined number of revolutions of the mixing rotor into the mixing compartment. Advantageously, each determined instant is determined as a function of a duration from the commencement of the mixing cycle.

Ideally, the duration of the mixing cycle is determined as a function of the operation of the mixing rotor, and preferably, the duration of the mixing cycle is determined as a function of a number of revolutions of the mixing rotor.

In one embodiment of the invention each determined instant at which one of the ingredients is to be loaded into the mixing compartment is determined as a function of the operation of the mixing rotor. Preferably, each determined instant at which the corresponding one of the ingredients is to be loaded into the mixing compartment is determined as a function of a number of revolutions of the mixing rotor from the commencement of the mixing cycle.

Preferably, the count of the revolutions of the mixing rotor of the mixing cycle commences at the commencement of loading of the ingredient requiring the largest predefined number of revolutions of the mixing rotor into the mixing compartment.

In one embodiment of the invention the predefined mixing periods for the respective ingredients are determined. Advantageously, the predefined mixing periods of the respective ingredients are determined as functions of the operation of the mixing rotor. Advantageously, the predefined mixing periods for the respective ingredients are determined as a function of a number of revolutions of the mixing rotor.

In another embodiment of the invention the predefined mixing period to which each ingredient is to be subjected is determined in order to avoid over-mixing of the ingredient, and preferably, the predefined mixing period to which each ingredient is to be subjected is determined in order to avoid under-mixing of the ingredient.

Preferably, a fibrous ingredient of the batch of animal feed is subjected to chopping in the mixing compartment during mixing thereof in order to reduce the length of the fibres of the fibrous ingredient. Advantageously, the predefined mixing period for the fibrous ingredient is determined in order to avoid over-chopping of the fibrous ingredient, and ideally, the predefined mixing period for the fibrous ingredient is determined in order to avoid under-chopping of the fibrous ingredient.

Advantageously, the predefined mixing period for the fibrous ingredient is determined in order to avoid the length of the fibrous ingredient being reduced below a minimum predefined length, and preferably, the predefined mixing period for the fibrous ingredient is determined in order to avoid the length of the fibrous ingredient being greater than a predefined maximum length.

In one embodiment of the invention the predefined mixing period for the fibrous ingredient is determined in order that the fibre length of the fibrous ingredient at the end of the mixing cycle lies in the range of 25mm to 100mm. Preferably, the predefined mixing period for the fibrous ingredient is determined in order that the fibre length of the fibrous ingredient at the end of the mixing cycle lies in the range of 30mm to 90mm. Advantageously, the predefined mixing period for the fibrous ingredient is determined in order that the fibre length of the fibrous ingredient at the end of the mixing cycle lies in the range of 50mm to 80mm.

In one embodiment of the invention one of the ingredients of the batch of animal feed comprises long cut grass silage.

In another embodiment of the invention one of the ingredients of the batch of animal feed comprises short cut grass silage.

In a further embodiment of the invention one of the ingredients of the batch of animal feed comprises maize silage.

In a still further embodiment of the invention one of the ingredients of the batch of animal feed comprises hay.

In a still further embodiment of the invention one of the ingredients of the batch of animal feed comprises straw.

In one embodiment of the invention the instants at which the respective ingredients are to be loaded into the mixing compartment are determined to allow for a loading period during which each ingredient is being loaded into the mixing compartment.

In one embodiment of the invention at least one of the ingredients of the batch of animal feed comprises soda grain.

In another embodiment of the invention at least one of the ingredients of the batch of animal feed comprises a nutritional additive.

In a further embodiment of the invention at least one of the ingredients of the batch of animal feed comprises a nutritional concentrate.

In a further embodiment of the invention at least one of the ingredients of the batch of animal feed comprises an energy additive.

In a still further embodiment of the invention at least one of the ingredients of the batch of animal feed comprises an energy concentrate.

In one embodiment of the invention the predefined mixing period to which the fibrous ingredient is to be subjected lies in the range of 30 revolutions to 300 revolutions of the mixing rotor. Preferably, the predefined mixing period to which the fibrous ingredient is to be subjected lies in the range of 100 revolutions to 200 revolutions of the mixing rotor.

Typically, the ingredient which is to be subjected to the largest predefined mixing period is a fibrous ingredient.

In one embodiment of the invention one of a visually perceptible and an aurally perceptible signal is produced to indicate the instants at which the respective ingredients are to be loaded into the mixing compartment during the mixing cycle. Preferably, one of a visually perceptible signal and an aurally perceptible signal is produced to indicate the end of the mixing cycle.

Advantageously, one of a visually perceptible signal and an aurally perceptible signal is produced to indicate the imminent approach of the end of the mixing cycle.

Advantageously, one of a visually perceptible signal and an aurally perceptible signal is produced to indicate when the weight of each ingredient loaded into the mixing compartment is equal to a required weight of that ingredient to prepare the batch of animal feed.

Ideally, one of a visually perceptible signal and an aurally perceptible signal is produced to indicate the imminent completion of loading of each ingredient into the mixing compartment.

Preferably, the weight of the respective ingredients in the mixing compartment is monitored during loading of the ingredients therein. Advantageously, the number of revolutions of the mixing rotor are monitored during the mixing cycle.

In one embodiment of the invention a device is provided for determining the instants at which the respective ingredients are to be loaded into the mixing compartment in response to monitoring of the mixing rotor.

In another embodiment of the invention the ingredients of the batch of animal feed are mixed in the mixing compartment by a mixing rotor comprising a paddle mixer. Preferably, the paddle mixer comprises at least one elongated mixing paddle extending in a general direction longitudinally relative to the rotational axis of the mixing rotor.

In another embodiment of the invention the paddle mixer co-operates with a chopping means for chopping a fibrous ingredient during mixing thereof. Preferably, the chopping means comprises a plurality of stationary chopping blades axially spaced apart relative to the rotational axis of the mixing rotor. Advantageously, each mixing paddle of the mixing rotor co-operates with at least some of the chopping blades for chopping the fibrous ingredient.

In another embodiment of the invention the mixer/feeder apparatus comprises a dispensing compartment communicating with the mixing compartment for receiving mixed animal feed for discharge therefrom. Preferably, a dispensing auger is rotatably located in the dispensing compartment for discharging mixed animal feed therefrom. Advantageously, the dispensing compartment is selectively isolatable from the mixing compartment for facilitating mixing of the ingredients of the animal feed therein.

The advantages of the invention are many. The method according to the invention for preparing a batch of animal feed avoids over-mixing and under-mixing of the batch of animal feed, and in particular over-mixing and under-mixing of the respective ingredients of the batch of animal feed is avoided.

By virtue of the fact that the duration of the mixing cycle is determined as being equal to the predefined mixing period of the ingredient which requires the largest predefined mixing period ensures that that ingredient will not be subjected to over-mixing or under-mixing. Additionally, by virtue of the fact that the instant during the mixing cycle at which each ingredient is to be loaded into the mixing compartment of the mixer/feeder apparatus is selected so that at that instant the remaining duration of the mixing cycle is substantially equal to the predefined mixing period of that ingredient, ensures that each ingredient is mixed for the appropriate mixing period, and is neither subjected to under-mixing nor over-mixing.

By virtue of the fact that the duration of the mixing cycle is determined as a function of the operation of the mixing rotor, the duration of the mixing cycle can be accurately defined, thus further avoiding over-mixing and under-mixing of the ingredients and the batch of animal feed. Additionally, by determining the duration of the mixing cycle as a function of a number of revolutions of the mixing rotor, a particularly accurate determination of the mixing cycle is provided, thus further ensuring over-mixing and under-mixing of the ingredients and the batch of animal feed is avoided.

By determining the instants at which the respective ingredients are to be loaded into the mixing compartment during the mixing cycle as a function of the operation of the mixing rotor, the accuracy at which the instants are determined is increased, and is further increased by determining the instants at which the respective ingredients are to be loaded into the mixing compartment as a function of the count of revolutions of the mixing rotor from the commencement of the mixing cycle.

Taking account of the loading periods required to load the respective ingredients into the mixing compartment when determining the instants at which the respective ingredients are to be loaded into the mixing compartment further avoids under-mixing and over-mixing of the ingredients and the batch of animal feed.

The invention will be more clearly understood from the following description of a preferred embodiment thereof, which is given by way of example only, with reference to the accompanying drawings, in which:

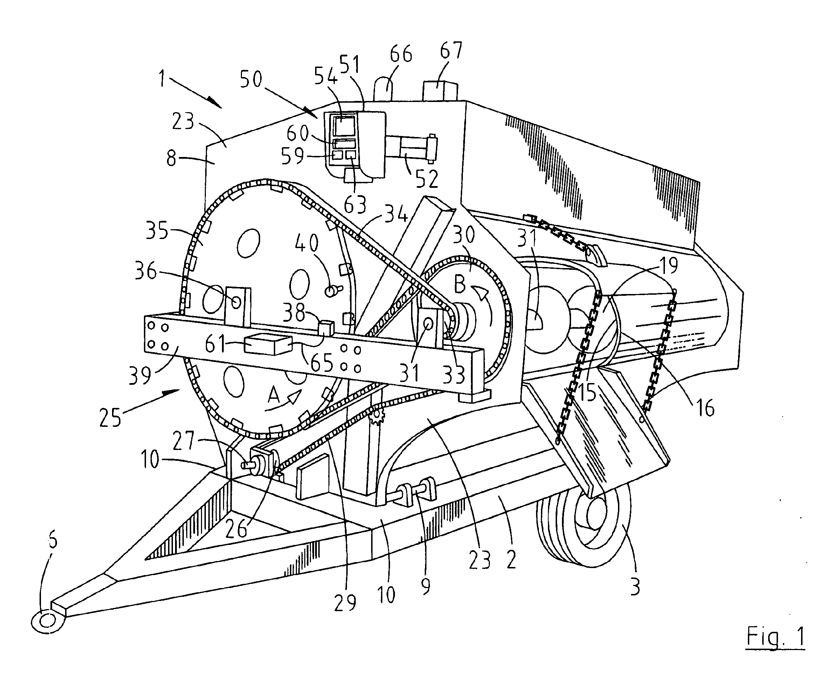

Fig. 1 is a perspective view of a mixer/feeder wagon for use with the method according to the invention for preparing a batch of animal feed from a plurality of ingredients,
Fig. 2 is a transverse cross-sectional end elevational view of the mixer/feeder wagon of Fig. 1,
Fig. 3 is a perspective view of the mixer/feeder wagon of Fig. 1, and
Fig. 4 is a block representation of apparatus used on the mixer/feeder wagon of Fig. 1 for carrying out the method according to the invention.

Referring to the drawings, a method according to the invention for preparing a batch of animal feed from a plurality of ingredients by mixing the ingredients in a mixer/feeder apparatus will be described below. However, before describing the method according to the invention for preparing a batch of animal feed, the mixer/feeder apparatus will first be described. In this embodiment of the invention the mixer/feeder apparatus comprises a mixer/feeder wagon 1 which is particularly suitable for mixing ingredients to produce batches of animal feed for dry cows, milking cows, calves, heifers, beef cattle and the like, and is of the general type disclosed in PCT Published Application Specification No. WO 96/32836 of the present applicant.

The mixer/feeder wagon 1 comprises a chassis 2 which is carried on a pair of rotatably mounted ground engaging wheels 3. A tow hitch 6 is provided at a forward end of the chassis 2 for hitching the mixer/feeder wagon 1 to a tractor or other suitable towing vehicle. A housing 8 is carried on the chassis 2 and is supported on weighing means comprising four load cells 9 at corresponding corners 10 of the chassis 2 for facilitating weighing of the ingredients of the animal feed in the housing 8 as will be described below.

The housing 8 is of steel plate material and defines a hollow interior region 12 which forms a mixing compartment 14 within which the animal feed is mixed, and a dispensing compartment 15 through which mixed animal feed is dispensed from the mixing compartment 14 through a discharge outlet 16. A mixing rotor, in this embodiment of the invention a paddle mixer 17 is rotatably mounted in the mixing compartment 14, and is rotatable about a primary rotational axis 18 in the direction of the arrow A for mixing the animal feed in the mixing compartment 14. A discharge means, namely, a discharge auger 19 rotatably mounted in the dispensing compartment 15 is rotatable about a secondary rotational axis 20 in the direction of the arrow B for urging mixed animal feed along the dispensing compartment 15 and through the discharge outlet 16. The primary and secondary rotational axes 18 and 20 extend parallel to each other.

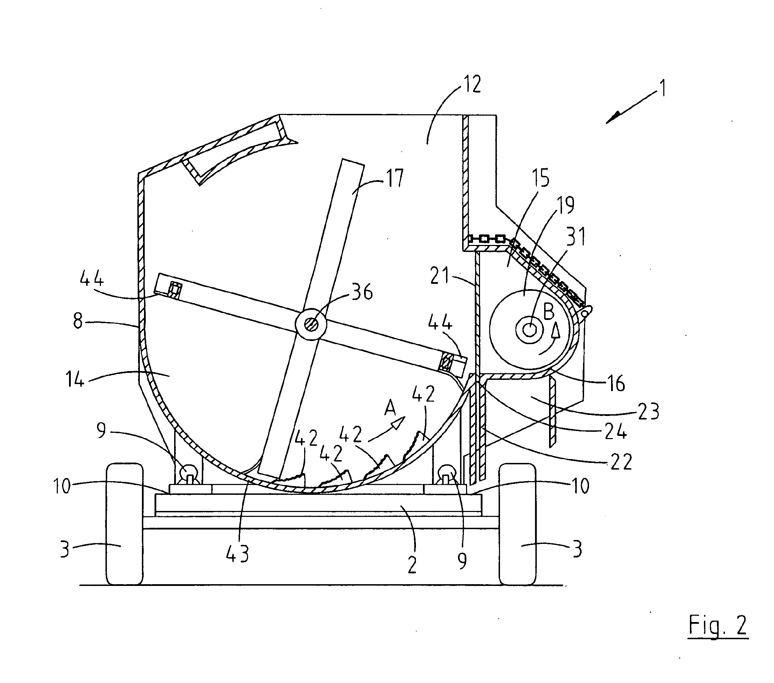

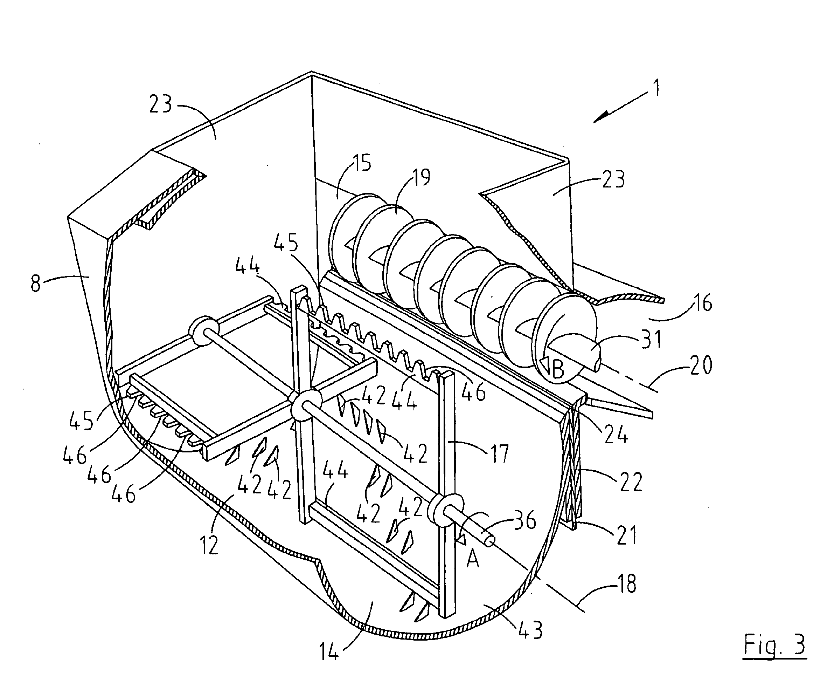

A closure plate 21 of steel plate material selectively isolates the dispensing compartment 15 from the mixing compartment 14 during mixing of animal feed in the mixing compartment 14. The closure plate 21 is slideably mounted in guide tracks 22 which are carried on opposite end walls 23 of the housing 8, and is accommodated through a longitudinally extending slot 24 extending through the housing 8 between the mixing compartment 14 and the dispensing compartment 15 from a lower open state illustrated in Fig. 3 for communicating the dispensing compartment with the mixing compartment, and a raised closed state illustrated in Fig. 2 for isolating the dispensing compartment 15 from the mixing compartment 14 during mixing of the animal feed in the mixing compartment 14. An hydraulic ram (not shown) is provided for urging the closure plate 21 between the lower open state and the raised closed state.

A drive transmission indicated generally by the reference numeral 25 located at the forward end of the housing 8 transmits drive from a gearbox 26 mounted on the chassis 2 to the paddle mixer 17 and the discharge auger 19. An input shaft 27 to the gearbox 26 is provided for coupling via a drive shaft (not shown) to the power takeoff shaft of a tractor to which the mixer/feeder wagon 1 is hitched for providing drive to the gearbox 26, and in turn to the paddle mixer 17 and the discharge auger 19. A primary chain drive 29 from the gearbox 26 drives a first sprocket 30 which is fast on a shaft 31 of the discharge auger 19 for driving the discharge auger 19. A second sprocket 33 also fast on the shaft 31 drives a secondary chain drive 34 for in turn driving a third sprocket 35 which is fast on a shaft 36 of the paddle mixer 17 for in turn driving the paddle mixer 17. The drive transmission 25 is geared to give a gear ratio of approximately 54:1 between the drive from the power takeoff shaft of a tractor and the rotational speed of the paddle mixer 17. It has been found that the ideal rotational speed of the paddle mixer 17 is approximately 8.5 rpm.

A monitoring means, in this embodiment of the invention a proximity sensor 38 is mounted on a framework 39 of the mixer/feeder wagon 1 for detecting a steel bolt 40 on the third sprocket 35 for counting the number of revolutions of the third sprocket 35, which is equal to the number of revolutions of the paddle mixer 17.

A plurality of stationary chopping blades 42 rigidly mounted on a semicircular base 43 of the housing 8 extend upwardly from the base 43 into the mixing compartment 14 and co-operate with paddles 44 of the paddle mixer 17 for chopping fibrous material of relatively long length into shorter lengths. The chopping blades 42 are axially spaced apart along the base 43, and are arranged in circumferentially staggered pairs in order to minimise the load on the paddle mixer 17 as the paddles 44 co-operate with the chopping blades 42 for chopping the fibrous material. The paddles 44 of the paddle mixer 17 define substantially longitudinally extending peripheral edges 45 which describe a cylinder as the paddle mixer 17 rotates, the diameter of which is just less than the diameter of the semicircular base 43, by approximately 15mm. A plurality of axially spaced apart recesses 46 formed into the paddles 44 from the peripheral edges 45 accommodate the chopping blades 42 therethrough as the paddle mixer 17 rotates. Thus as the paddle mixer 17 rotates, the paddles 44 urge the fibrous material against the chopping blades 42 for chopping thereof. It has been found that by subjecting the fibrous material, depending on its average length, to an appropriate number of revolutions of the paddle mixer 17, the fibrous material can be reduced to lengths in the range of 50mm to 100mm.

Accordingly, the mixer/feeder wagon 1 according to this embodiment of the invention, as well as mixing the ingredients of the batch of animal feed, simultaneously chops the fibrous material, so that the fibrous material of the mixed batch of animal feed is of length in the range of 50mm to 100mm.

With the exception of the operation of the closure plate 21 and the provision of the proximity sensor 38 and the steel bolt 40 on the third sprocket 35, the mixer/feeder wagon 1 up to this point is substantially similar to that disclosed in PCT published Application Specification No. WO 96/32836, and operation of the mixer/feeder wagon 1 for mixing and dispensing animal feed is also substantially similar to the operation of the mixer/feeder wagon disclosed in PCT published Application Specification No. WO 96/32836, and further description of the mixer/feeder wagon and its operation in the mixing and dispensing of animal feed should not be required.

Turning now to the method according to the invention for preparing a batch of animal feed from a plurality of ingredients, initially the ingredients which are available to a farmer and from which batches of animal feed are to be produced are analysed in order to assess the nutritional value of the ingredients, the structure of the fibres of the fibrous ingredients, the average length of the fibres of the fibrous ingredients, and other relevant properties of the ingredients. The weights of the respective ingredients required to prepare a feed ration for a single one of the animals is then determined. A mixing regime of a mixing cycle for mixing the ingredients is then prepared based on the type of the ingredients, the type of mixer/feeder wagon to be used, and the type of animals to be fed. The mixing regime is determined in order to produce a homogenous mix of the ingredients, while at the same time avoiding over-mixing and under-mixing of the ingredients and the batch of animal feed. In particular, the mixing regime is determined so that at the end of the mixing cycle the fibres of the fibrous ingredients are within a desired range of lengths.

In accordance with the method according to the invention, the mixing periods during the mixing cycle, during which the respective ingredients are to be subjected to mixing in the mixing compartment 14 of the mixer/feeder wagon 1 are determined in order to obtain a homogenously mixed batch of animal feed, while at the same time avoiding under-mixing and over-mixing. In this embodiment of the invention the mixing period to which each of the ingredients is to be subjected is determined as a function of the number of revolutions of the paddle mixer 17 to which that ingredient is to be subjected during the mixing cycle. Thus the number of revolutions of the paddle mixer 17 of the mixer/feeder wagon 1 to which each ingredient is to be subjected is determined. In the case of the fibrous ingredients, the number of revolutions of the paddle mixer 17 to which each of the fibrous ingredients is to be subjected is determined based on producing the fibres of the fibrous ingredients to be within a desired range of lengths, and also to ensure homogenous mixing of the fibrous ingredients with the other ingredients. In the case of the non-fibrous ingredients, the number of revolutions of the paddle mixer 17 to which those non-fibrous ingredients are to be subjected is determined in order to ensure a final homogenously mixed batch of animal feed.

Having determined the number of revolutions of the paddle mixer 17 to which each of the ingredients are to be subjected, the duration of the mixing cycle is determined. The duration of the mixing cycle is determined as a function of the number of revolutions of the paddle mixer 17 to which the batch of animal feed is to be subjected in the mixing compartment 14 of the mixer/feeder wagon 1. The ingredient which is to be subjected to the largest number of revolutions of the paddle mixer 17 during the mixing cycle is selected, and the duration of the mixing cycle is determined as the number of revolutions of the paddle mixer 17 to which that ingredient is to be subjected. In general, the ingredient which is to be subjected to the largest number of revolutions of the paddle mixer 17 will be one of the fibrous ingredients. Although, in general, to damp down dust, particularly in the case of powder ingredients, such as concentrates and to avoid any danger of loss of any of such powder ingredients, one of the liquid ingredients is the first of the ingredients to be loaded into the mixing compartment 14.

With the number of revolutions of the paddle mixer 17 of the mixing cycle determined, the instants during the mixing cycle at which the respective remaining ingredients are to be loaded into the mixing compartment 14 are determined. In this embodiment of the invention, the instant during the mixing cycle at which each of the remaining ingredients is to be loaded into the mixing compartment 14 is determined as a function of the count of the number of revolutions of the paddle mixer 17 from the commencement of the mixing cycle. The counts of the revolutions of the paddle mixer 17 during the mixing cycle from the commencement of the mixing cycle at which the respective remaining ingredients are to be loaded into the mixing compartment 14 are determined so that the count of the revolutions of the paddle mixer 17 at which each ingredient is to be loaded into the mixing compartment 14 is such that the number of revolutions of the paddle mixer 17 remaining in the mixing cycle at that count is equal to the number of revolutions of the paddle mixer 17 to which that ingredient is to be subjected. Thus, throughout the mixing cycle each ingredient is subjected to the appropriate number of revolutions of the paddle mixer 17, thereby over-mixing and under-mixing of the ingredients and the batch of animal feed is avoided.

The loading of each of the ingredients into the mixing compartment 14 takes some time, and when determining the mixing periods during which the respective ingredients are to be subjected to mixing in the mixing compartment, account is taken of this. This, in turn, is taken into account when determining the counts of the revolutions of the paddle mixer 17 from the commencement of the mixing cycle at which the respective ingredients are to be loaded into the mixing compartment.

When the weights of the respective ingredients have been determined to produce an animal feed ration for one animal and the mixing regime has been determined, this data is given to the farmer so that a batch of animal feed can be produced for feeding to a herd of animals. The data containing the weights of the respective ingredients and the mixing regime is provided in electronic format suitable for loading into a device 50, which will be described below, which is mounted on the mixer/feeder wagon 1 for monitoring the operation of the mixer/feeder wagon 1 and for indicating when the respective ingredients of the batch of animal feed are to be loaded into the mixing compartment 14 of the mixer/feeder wagon 1.

Once the farmer has the weights of the ingredients to produce a feed ration for a single animal along with the mixing regime, the farmer is merely required to multiply the weights of the respective ingredients to produce a feed ration for a single animal by the number of animals to be fed with the batch of animal feed, in order to determine the total weight of each ingredient required to produce the batch of animal feed. This operation is carried out by the device 50.

The device 50 which is mounted on the mixer/feeder wagon 1 stores the weights of the ingredients to produce a feed ration for a single animal as well as the mixing regime in electronic format, and monitors the operation of the mixer/feeder wagon 1. In response to the monitoring of the operation of the mixer/feeder wagon 1, the device 50 determines the instants during a mixing cycle of a batch of the animal feed at which the respective ingredients of the animal feed are to be loaded into the mixer/feeder wagon 1 based on the count of revolutions of the paddle mixer 17.

Before describing the device 50 in detail, the following three examples set out particulars of ingredients and the weights thereof as well as the appropriate mixing regime for preparing respective batches of animal feed for one hundred animals by the method according to the invention. In the tables of the respective examples, column 1 of each table includes particulars of the respective ingredients of the batch of animal feed of that example. Column 2 shows the weight required of each ingredient per animal. Column 3 shows the total weight of each ingredient to produce the batch of animal feed to feed a herd of one hundred animals. Column 4 shows the number of revolutions of the paddle mixer 17 to which each ingredient is to be subjected in the mixing compartment 14. Column 5 shows the count of the revolutions of the paddle mixer 17 from the commencement of the mixing cycle at which each of the ingredients is to be loaded into the mixing compartment 14.

### Example 1

| Ingredient | Weight per animal Kgs | Total weight Kgs | Total number of revolutions | Revolution count from commencement of the mixing cycle at which the ingredient is to be loaded |
|---|---|---|---|---|
| Molasses | 1 | 100 | 106 | 0 |
| Straw | 0.7 | 70 | 96 | 10 |
| Minerals | 0.3 | 30 | 86 | 20 |
| Sodawheat | 4.9 | 490 | 76 | 30 |
| Concentrate | 5 | 500 | 66 | 40 |
| Silage 3^{rd} cut | 12 | 1200 | 56 | 50 |
| Silage 1^{st} cut | 17 | 1700 | 18 | 88 |

A batch of animal feed prepared from the ingredients of the table of Example 1 is particularly suitable for feeding to milking cows.

In Example 1 the duration of the mixing cycle is one hundred and six revolutions of the paddle mixer 17. The molasses, which is a liquid ingredient, is the first of the ingredients to be loaded into the mixing compartment 14 at the commencement of the mixing cycle. The molasses is loaded first in order to dampen down dust and to ensure that any ingredients, such as concentrates which may be in powder form are not lost. The next ingredient which is to be loaded into the mixing compartment 14 is the main fibrous ingredient, which in this case is straw, and is loaded into the mixing compartment 14 at the count of ten revolutions of the paddle mixer 17 from the commencement of the mixing cycle. The reason ten counts of revolutions of the paddle mixer 17 are allowed between the commencement of the mixing cycle and the commencement of loading of the straw is to allow time for the loading of the molasses. The loading of the molasses lasts for a duration of approximately ten revolutions of the paddle mixer 17. Therefore, as soon as loading of the molasses has been completed, the straw is immediately loaded into the mixing compartment at the count of ten revolutions of the paddle mixer from the commencement of the mixing cycle. In this example the straw requires to be subjected to ninety-six revolutions of the paddle mixer 17, and effectively is the ingredient which requires to be subjected to the maximum number of revolutions of the paddle mixer 17. However, since it is desirable to load a liquid ingredient first to dampen down dust and powder ingredients, the molasses is the first ingredient to be loaded into the mixing compartment. Accordingly, in this embodiment of the invention the duration of the mixing cycle which is based on the number of revolutions of the paddle mixer 17 to which the straw is to be subjected plus the loading time of the molasses, namely, ten revolutions of the paddle mixer 17, thus giving a total mixing cycle duration of one hundred and six revolutions of the paddle mixer 17. The remaining ingredients are loaded into the mixing compartment at the counts set forth in column 5 of the table of Example 1 so that they are each subjected to the appropriate number of revolutions during the mixing cycle to which they should be subjected in order to produce a homogenously mixed batch of animal feed, and to avoid under-mixing and over-mixing of the ingredients and the animal feed. These mixing periods to which the ingredients are to be subjected during the mixing cycle are set forth in column 4 of the table of Example 1.

### Example 2

| Ingredient | Weight per animal Kgs | Total weight Kgs | Total number of revolutions | Revolution count from commencement of the mixing cycle at which the ingredient is to be loaded |
|---|---|---|---|---|
| Molasses | 1 | 100 | 188 | 0 |
| Straw | 5 | 500 | 178 | 10 |
| Minerals | 0.4 | 40 | 168 | 20 |
| Sodawheat | 1.25 | 125 | 158 | 30 |
| Concentrate | 1.25 | 125 | 148 | 40 |
| Silage | 18 | 1800 | 18 | 170 |

A batch of animal feed prepared from the ingredients of the table of Example 2 is particularly suitable for feeding to dry cows.

In Example 2 the duration of the mixing cycle is one hundred and eighty-eight revolutions of the paddle mixer 17. In the table of Example 2 the straw is the ingredient which effectively requires to be subjected to the maximum number of revolutions of the paddle mixer 17. However, as in the case of Example 1, the molasses ingredient is loaded into the mixing compartment 14 prior to loading of the straw. Ten revolutions of the paddle mixer 17 are allowed in order to provide sufficient time for loading of the molasses. Accordingly, in Example 2 the duration of the mixing cycle is computed by the total number of revolutions of the paddle mixer 17 to which the straw is to be subjected plus the additional ten revolutions to facilitate loading of the molasses. The straw is to be subjected to one hundred and seventy-eight revolutions of the paddle mixer 17, and therefore the duration of the mixing cycle is one hundred and seventy-eight revolutions of the paddle mixer 17.

### Example 3

| Ingredient | Weight per animal Kgs | Total weight Kgs | Total number of revolutions | Revolution count from commencement of the mixing cycle at which the ingredient is to be loaded |
|---|---|---|---|---|
| Pot ale | 2 | 200 | 139 | 0 |
| Potatoes | 4 | 400 | 129 | 10 |
| Straw | 2 | 200 | 46 | 93 |
| Concentrate | 2 | 200 | 36 | 103 |
| Cereals | 6 | 600 | 18 | 121 |

A batch of animal feed prepared from the ingredients of the table of Example 3 is particularly suitable for feeding to beef cows.

In Example 3 the duration of the mixing cycle is one hundred and thirty-nine revolutions of the paddle mixer 17. In the table of Example 3 the potato ingredients effectively require to be subjected to the maximum number of revolutions of the paddle mixer 17, namely, one hundred and twenty-nine revolutions of the paddle mixer 17. However, in this case the pot ale ingredient, which is a liquid ingredient, is loaded into the mixing compartment 14 prior to loading of the potatoes. The delay of ten revolutions of the paddle mixer 17 from the commencement of the mixing cycle, at which loading of the pot ale commences is to allow sufficient time for the pot ale to be loaded into the mixing compartment 14 prior to loading of the potatoes. Accordingly, the duration of the mixing cycle of the batch of animal feed of Example 3 is determined by the maximum number of revolutions of the paddle mixer 17 to which the potatoes are to be subjected, plus the ten revolutions of the paddle mixer 17 to allow for loading of the pot ale. Thus, the duration of the mixing cycle is one hundred and thirty-nine revolutions of the paddle mixer 17. In Example 3 the straw is to be subjected to forty-six revolutions of the paddle mixer 17, and is thus loaded into the mixing compartment 14 at a count of ninety-three revolutions of the paddle mixer 17 from the commencement of the mixing cycle.

Turning now to the device 50, the device 50 comprises a housing 51 which is mounted on the housing 8 of the mixer/feeder wagon 1 by a swivelable bracket 52. A visual display screen 54 located in the housing 51 displays data to an operator of the mixer/feeder wagon 1 which includes a display of the ingredients sequentially of the batch of animal feed to be mixed, the weight of each ingredient to make up the batch of animal feed, the instants during the mixing cycle at which the respective ingredients are to be loaded into the mixing compartment 14 of the mixer/feeder wagon 1 in order to avoid under-mixing and over-mixing of the respective ingredients, as will be described in more detail below.

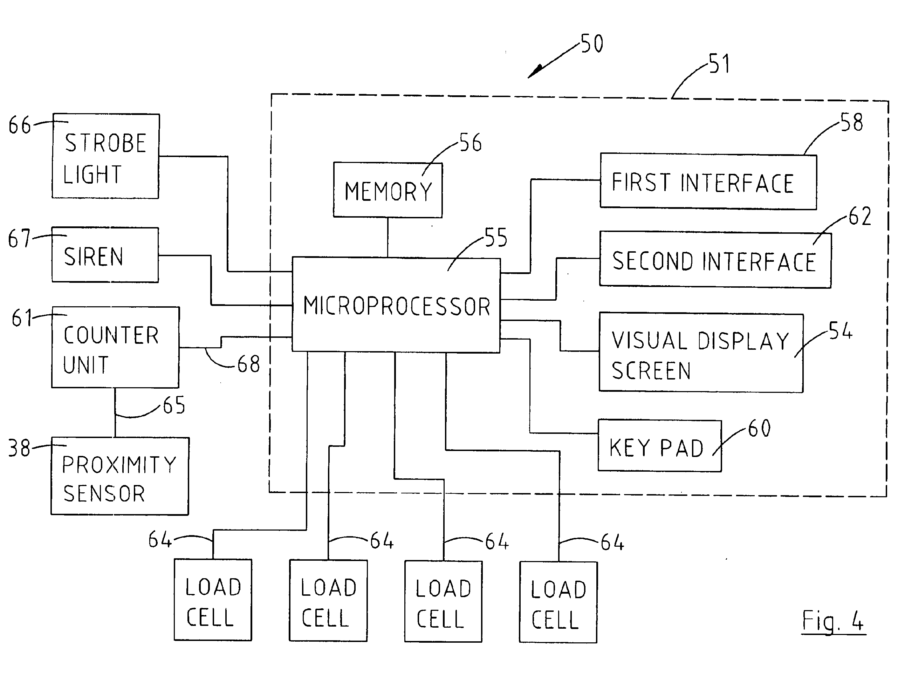

Referring in particular to Fig. 4, a signal processing means, in this embodiment of the invention provided by a microprocessor 55, is located within the housing 51 for controlling the operation of the device 50. A first storing means, in this embodiment of the invention provided by a suitable memory, typically a random access memory (RAM) 56, stores data relating to the ingredients of the animal feed, the weights of the ingredients to make up a feed ration for one animal, the total number of revolutions of the paddle mixer 17 which constitutes a mixing cycle, and the counts of the revolutions of the paddle mixer 17 during the mixing cycle from the commencement thereof at which the respective ingredients are to be loaded into the mixing compartment 14.

A first input means comprising a first interface 58, which may be a parallel or serial interface, includes a first input port 59 in the housing 51 for uploading through the microprocessor 55 into the RAM 56, the data relating to the ingredients of the animal feed, the weights thereof to produce a feed ration for one animal, the total number of revolutions of the paddle mixer 17 which constitutes a mixing cycle, and the counts of the number of revolutions of the paddle mixer 17 from the commencement of the mixing cycle at which the respective ingredients are to be loaded into the mixing compartment 14. In this embodiment of the invention the first input port 59 is a USB port. A second input means comprising a keypad 60 in the housing 51 facilitates manual inputting of data into the microprocessor 55 and for programming the microprocessor 55. Programming of the microprocessor 55 can also be carried out through the first interface 58. In this embodiment of the invention the number of animals to be fed by the batch of animal feed is inputted to the microprocessor 55 by an operator of the mixer/feeder wagon 1 through the keypad 60. The microprocessor 55 is programmed to compute the total weight of each ingredient from the data stored in the RAM 56 and the inputted number of animals for which the batch of animal feed is to be prepared.

A second interface means comprising a second interface 62 which includes a second input port 63 in the housing 51 is provided through which signals from the load cells 9, which are indicative of the weight of the ingredients currently in the mixing compartment 14 are inputted to the microprocessor 55, and through which signals from the proximity sensor 38, which are indicative of a count of the number of revolutions of the paddle mixer 17, are inputted to the microprocessor 55. A cable 64 from the load cells 9 couples the load cells 9 to the second input port 63. In this embodiment of the invention signals from the proximity sensor 38 are applied to an electronic counter unit 61 which is located on the framework 39 through a cable 65. The counter unit 61 continuously and cumulatively counts the revolutions of the third sprocket 35, and in turn the revolutions of the paddle mixer 17. The cumulative count of the revolutions of the paddle mixer 17 is read by the microprocessor 55 from the electronic count unit 61 through the second interface 62 and the second input port 63 through a cable 68 which couples the electronic counter unit 61 to the second input port 63 of the device 50.

An alerting means, in this embodiment of the invention provided by a siren 67 which is mounted on the housing 8 of the mixer/feeder wagon 1 is operated under the control of the microprocessor 55 of the device 50 for indicating the instants during the mixing cycle at which the respective ingredients are to be loaded into the mixing compartment 14, as well as for indicating when the appropriate weights of the respective ingredients have been loaded into the mixing compartment 14, and for indicating when the mixing cycle has been completed. The siren 67 is also operated under the control of the microprocessor 55 for indicating when the end of the mixing cycle is imminent, and when only a predefined amount of each ingredient still remains to be loaded into the mixing compartment 14. The siren 67 is operated by a pulsed signal outputted by the microprocessor 55 when the end of the mixing cycle is approaching, as well as when only the predefined amount of each ingredient still remains to be loaded into the mixing compartment 14. The frequency of the pulsed signal progressively increases as the end of the mixing cycle is approaching, until the end of the mixing cycle has been reached. At which stage the siren 67 is continuously operated by a continuous signal outputted by the microprocessor 55 for a period of five seconds. In this embodiment of the invention the siren 67 is operated by the pulsed signal when only two revolutions of the paddle mixer 17 remain to complete the mixing cycle. Similarly, as the weight of each ingredient being loaded into the mixing compartment approaches the total weight required of that ingredient, the frequency of the pulsed signal from the microprocessor 55 to the siren 67 increases until the loading of that ingredient has been completed, at which stage the pulsed signal becomes a continuous signal for a period of five seconds to operate the siren 67 continuously for five seconds indicting that loading of that ingredient has been completed. In this embodiment of the invention the pulsed signal is outputted when the outstanding amount of each ingredient still to be loaded into the mixing compartment reaches the predefined level, which in this case is approximately 15% of the total weight of that ingredient.

The microprocessor 55 is programmed so that after the device 50 has been activated, the microprocessor 55 outputs a signal to the visual display screen 54 to display a message requesting inputting of the number of animals for which the batch of animal feed is to be prepared. On the number of animals being inputted through the keypad 60, the microprocessor 55 is programmed to look up the data relating to the ingredients of the animal feed stored in the RAM 56, and to compute the total weight of each ingredient required to prepare the batch of animal feed based on the inputted number of animals. The microprocessor 55 is programmed also to look up the total number of revolutions of the paddle mixer 17 which constitutes the duration of the mixing cycle stored in the RAM 56, as well as the counts of the revolutions of the paddle mixer 17 from the commencement of the mixing cycle at which the respective ingredients are to be loaded into the mixing compartment 14. With this data computed and obtained, the microprocessor 55 is programmed to then output a first one of a plurality of first signals to the visual display screen 54 which is indicative of the identity of the first of the ingredients to be loaded into the mixing compartment 14, together with the total weight of that ingredient to be loaded into the mixing compartment 14. The identity of the first ingredient to be loaded into the mixing compartment 14 and the total weight thereof are simultaneously displayed on the visual display screen 54.

The microprocessor 55 is programmed to read signals from the load cells 9 and to compute the weight of each ingredient currently in the mixing compartment 14 from the signals from the load cell 9. The microprocessor 55 is also programmed to read signals from the electronic counter unit 61 and to compute the number of revolutions of the paddle mixer 17 to which the ingredients have been subjected from the commencement of a mixing cycle. Additionally, as the respective ingredients are being loaded into the mixing compartment 14, the microprocessor 55 is programmed to compute the outstanding weight of the ingredient which is currently being loaded into the mixing compartment 14 and which still has to be loaded into the mixing compartment 14. The microprocessor 55 outputs an amount outstanding signal to the visual display screen 54, which is continuously updated, and which operates the visual display screen 54 to display the outstanding weight of the ingredient which is currently being loaded into the mixing compartment 14, and which still has to be loaded, in a countdown manner. In other words, the outstanding weight of each ingredient still to be loaded into the mixing compartment 14 as that ingredient is being loaded is counted down on the visual display screen 54.

The microprocessor 55 is programmed so that on the completion of loading of the first and subsequent ingredients up to and including the second last ingredient to be loaded, the microprocessor 55 from the signals read from the electronic counter unit 61 identifies the count of revolutions of the paddle mixer 17 from the commencement of the mixing cycle at which the next ingredient is to be loaded, and outputs a second signal to the visual display screen 54 and to the siren 67, which causes the visual display screen 54 to flash and the siren 67 to continuously sound in order to indicate that loading of the next ingredient into the mixing compartment 14 is to commence. The siren is continuously operated for five seconds, and the display screen 54 is operated to flash for five seconds.

After the last of the ingredients has been loaded into the mixing compartment, the microprocessor 55 is programmed to output a countdown signal to the visual display screen 54, which is continuously updated for operating the visual display screen 54 to count down the number of revolutions of the paddle mixer 17 to the end of the mixing cycle. When the number of counts of the paddle mixer 17 remaining to the end of the mixing cycle is two revolutions, the microprocessor 55 is programmed to output a first warning signal which is provided by the pulsed signal to the siren 67, the frequency of which increases until the mixing cycle has been completed. At which stage the microprocessor 55 outputs a mixing cycle complete signal, which is a continuous signal to the siren 67 for five seconds, thereby causing the siren 67 to continuously operate for five seconds.

The microprocessor 55 is programmed so that when the loading of each ingredient has been completed, the microprocessor 55 outputs a countdown signal to the visual display screen 54 which is continuously updated and which displays the outstanding number of revolutions of the paddle mixer 17 to the count at which the next ingredient is to be loaded into the mixing compartment 14.

When the amount of each ingredient still to be loaded into the mixing compartment reaches the predefined amount, which as discussed above is approximately 15% of the total weight of that ingredient, the microprocessor 55 is programmed to output a second warning signal to the visual display screen 54 which causes the visual display screen 54 to flash, in order to warn the operator that the loading of that particular ingredient is almost completed. The microprocessor 55 also outputs a second warning signal to the siren 67, which is one of the pulsed signal, the frequency of which increases as completion of the loading of that ingredient approaches until the weight of that ingredient loaded into the mixing compartment is substantially equal to the required weight of that ingredient. At which stage, as discussed above, the signal to the siren becomes continuous and is held on the siren 67 for five seconds, thus indicating that the loading of that ingredient is complete.

The microprocessor 55 is programmed to identify the commencement of the mixing cycle from signals read from the load cells 9. Once the signals from the load cells 9 are indicative of the first ingredient being loaded into the mixing compartment 14, the microprocessor 55 determines the commencement of the mixing cycle and commences to count the number of revolutions of the paddle mixer 17 from the signals read from the electronic counter unit 61. The microprocessor 55 is similarly programmed to identify the commencement of loading of each of the other ingredients in a similar manner.

Additionally, on completion of the loading of each ingredient into the mixing compartment 14, the microprocessor 55 is programmed to output the next first signal to the visual display screen 54, which operates the visual display screen to display the identity of the next ingredient and the total weight thereof to be loaded into the mixing compartment 14.

A strobe light 66 is also mounted on the housing 8 of the mixer/feeder wagon 1 and is operated under the control of the microprocessor 55 of the device 50 for indicating when loading of each ingredient has been completed, and when the mixing cycle has been completed. The strobe light 66 is powered under the control of the microprocessor 55 for a period of five seconds when the loading of each ingredient has been completed, and at the end of the mixing cycle. However, it is envisaged in many cases, the strobe light may be omitted.

A second storing means for storing the actual weights of the respective ingredients loaded into the mixing compartment 14, and the actual mixing regime carried out by the operator in preparing the batch of animal feed, in this embodiment of the invention is also provided by the RAM 56. However, if desired, a separate storing means as well as the RAM 56 may be provided to store this data. The microprocessor 55 is programmed to compute the actual weight of each ingredient loaded into the mixing compartment 14 from signals read from the load cells 9. Additionally, the microprocessor 55 is programmed to determine the instants during the mixing cycle based on the count of revolutions of the paddle mixer 17 at which loading of the respective ingredients into the mixing compartment 14 commenced. The microprocessor 55 determines the count of the revolutions of the paddle mixer 17 from the commencement of the mixing cycle at which loading of each ingredient into the mixing compartment 14 commenced from signals from the load cells 9 and the electronic counter unit 61. The microprocessor 55 is also programmed to store the actual weights of the respective ingredients and the corresponding counts of the revolutions of the paddle mixer 17 from the commencement of the mixing cycle at which loading of the respective ingredients into the mixing compartment 14 commenced in the RAM 56. At appropriate intervals this data may be downloaded through the first interface 58 under the control of the microprocessor 55 for subsequent comparison with the ideal mixing regime, and also for comparison with results of, for example, milk yield for milking cows or weight gain from beef cattle fed by the batch of animal feed against ideal milk yields or ideal weight gains, as the case may be, which would be obtained from an ideal batch of animal feed.

In use, with the count of the total number of revolutions of the paddle mixer 17 which constitutes the mixing cycle, the particulars of the ingredients, and the weights thereof to produce a feed ration for a single animal, together with the counts of the revolutions of the paddle mixer 17 from the commencement of the mixing cycle at which the respective ingredients of the batch of animal feed are to be loaded into the mixing compartment 14 of the mixer/feeder wagon 1 stored in the RAM 56, the mixer/feeder wagon 1 is ready for use.

When it is desired to mix a batch of animal feed, the mixer/feeder wagon 1 is operated with the closure plate 21 in the raised closed state and the paddle mixer rotating. The operator activates the device 50, which displays a request on the visual display screen 54 requesting the number of animals to be fed with the batch of animal feed to be entered. The number of animals to be fed from the batch of animal feed is entered through the keypad 60. The microprocessor 55 computes the total weight of each ingredient required to prepare the batch of animal feed based on the entered number of animals. The first ingredient which is to be loaded into the mixing compartment 14 and the weight of that ingredient are simultaneously displayed on the visual display screen 54 under the control of the microprocessor 55. The microprocessor 55 reads signals from the load cells 9 to determine when loading of the first ingredient has commenced. Alternatively, the microprocessor 55 may be programmed to enable the operator to indicate that he is ready to commence loading of the first ingredient by depressing an appropriate one of the keys of the keypad 60, thus indicating to the microprocessor 55 that loading of the first of the ingredients is about to commence. On determining that loading of the first ingredient has commenced either as a result of the signals from the load cells 9 or an input through the keypad 60, the microprocessor 55 reads the signals from the electronic counter unit 61, and commences to count the revolutions of the paddle mixer 17 from the commencement of the mixing cycle.

The microprocessor 55 reads the signals from the load cells 9 and computes the weight of the first ingredient currently loaded into the mixing compartment 14, and subtracts this value from the total weight of the first ingredient to be loaded into the mixing compartment 14 in order to determine the outstanding weight of the first ingredient still to be loaded into the mixing compartment. This value is displayed on the visual display screen 54, and is continuously updated, thus counting down the weight of the first ingredient still to be loaded into the mixing compartment 14.

When the loading of the first ingredient into the mixing compartment 14 is nearing completion, in other words, when only the predefined amount of the first ingredient still has to be loaded into the mixing compartment 14, the microprocessor 55 causes the visual display screen 54 to flash, and also commences to output the pulsed signal to the siren 67, which progressively increases in frequency until the weight of the first ingredient in the mixing compartment is substantially equal to the required weight of the first ingredient. At which stage the signal outputted by the microprocessor 55 to operate the siren 67 becomes a continuous signal, and is held on the siren 67 for five seconds to indicate that loading of the first ingredient is complete. The continuous signal is also applied to and held on the strobe light 66 to operate the strobe light 66 continuously for five seconds to also indicate that loading of the first ingredient is complete.

The microprocessor 55 then operates the visual display screen 54 to simultaneously display the identity of the second ingredient and the weight thereof to be loaded into the mixing compartment 14. The microprocessor 55 also determines the number of revolutions still to be completed before loading of the second ingredient into the mixing compartment 14 is to commence, and the microprocessor 55 operates the visual display screen 54 to count down the number of revolutions of the paddle mixer 17 to the count at which the second ingredient is to be loaded into the mixing compartment 14. When the count of the revolutions of the paddle mixer 17 from the commencement of the mixing cycle at which the second ingredient is to be loaded has been reached, the microprocessor 55 outputs the second signal to the siren 67, which is the continuous signal for five seconds, thus indicating that loading of the second ingredient is to be commenced.

The operator then immediately commences loading in the second ingredient, and the microprocessor 55 reads the signals from the load cells 9 and computes the current weight of the second ingredient which has been loaded into the mixing compartment 14. This value is subtracted from the total value of the second ingredient to be loaded into the mixing compartment 14, in order to produce the outstanding weight of the second ingredient still to be loaded into the mixing compartment 14. The value of the outstanding weight of the second ingredient still to be loaded into the mixing compartment 14 is displayed on the visual display screen 54, which is continuously updated, and counted down. As loading of the second ingredient into the mixing compartment 14 is approaching completion, in other words, when the predefined amount of the second ingredient is still to be loaded into the mixing compartment 14, the microprocessor 55 operates the visual display screen 54 to flash, and outputs the pulsed signal to the siren 67, the frequency of which is progressively increased until the weight of the second ingredient which has been loaded into the mixing compartment 14 is substantially equal to the required weight of the second ingredient. At which stage, the pulsed signal becomes continuous for five seconds. The continuous signal is also applied to the strobe light 66 for five seconds.

And so loading of the respective ingredients of the batch of animal feed into the mixing compartment 14 continues until the last of the ingredients of the batch to be loaded has been loaded into the mixing compartment 14. At which stage, the microprocessor 55 determines the remaining number of revolutions of the paddle mixer 17 to which the animal feed is to be subjected in the mixing compartment 14, and the number of revolutions of the paddle mixer 17 to complete the mixing cycle of the batch of animal feed is displayed on the visual display screen 54, and is continuously updated and counted down. As the end of the mixing cycle is approaching, in this case when the number of revolutions of the paddle mixer 17 remaining in the mixing cycle is two revolutions, the microprocessor 15 flashes the display on the visual display screen 54, and outputs the pulsed signal to the siren 67, the frequency of which progressively increases until the mixing cycle has been completed, at which stage the pulsed signal becomes a continuous signal for five seconds. The continuous signal is also applied to the strobe light 66 for five seconds.

If on completion of loading of any one of the ingredients, the next ingredient is to be immediately loaded, the microprocessor 55 immediately at the end of loading of the just loaded ingredient operates the visual display screen 54 to simultaneously display the identity of the next ingredient and the weight thereof to be loaded and flashes the visual display screen 54. The microprocessor also outputs a continuous signal to the siren 67 to operate the siren continuously for five seconds.

The actual particulars and the actual mixing regime of each batch of animal feed mixed in the mixer/feeder wagon 1 is recorded and stored in the RAM 56, and time and date stamped for future comparison with an ideal batch of animal feed as discussed above. During the mixing cycle, the microprocessor 55 computes the actual weight of each ingredient loaded into the mixing compartment 4 from the signals from the load cells 9 and from the signals from the electronic counter unit 61. The microprocessor 55 is programmed to compute the weight of each ingredient loaded into the mixing compartment 14 by reading signals from the load cells 9 between the count of the revolutions of the paddle mixer at which that ingredient should have been loaded and the count at which the next ingredient is to be loaded. The microprocessor 55 stores the respective actual weights of the respective ingredients in the RAM 56. The respective weights are time and date stamped and cross-referenced with the particulars of the batch.

Additionally, the microprocessor 55 by monitoring the signals from the load cells 9 and the signals from the electronic counter unit 61 determines the counts of the revolutions of the paddle mixer 17 from the commencement of the mixing cycle at which loading of the respective ingredients into the mixing compartment 14 commenced, and this data is also stored and cross-referenced with the respective ingredients in the RAM 56 and is similarly time and date stamped and cross-referenced with the particulars of the batch. The total number of revolutions of the paddle mixer 17 to which the batch of animal feed was subjected during the mixing cycle, in other words, the total number of revolutions of the paddle mixer 17 from the commencement of the mixing cycle to the actual end of the mixing cycle is also recorded and stored in the RAM 56, and is time and date stamped and cross-referenced with the particulars of the batch.

As discussed above, the microprocessor 55 may be programmed to allow the operator manually input a signal to indicate when loading of each ingredient is about to commence. Such a signal could be inputted through the keypad 60. This signal could be used for determining the commencement of loading of each ingredient instead of determining the commencement of loading of each ingredient from signals from the load cells 9 and the electronic counter unit 61.

On completion of mixing of the batch of animal feed, the mixer/feeder wagon 1 is trailed to the location at which the animal feed is to be dispensed. On reaching the location at which the batch of animal feed is to be dispensed, the closure plate 21 is operated from the raised closed state to the lower open state, and as the paddle mixer 17 is rotated in the direction of the arrow A, the mixed animal feed is urged into the dispensing compartment 15 and in turn urged along the dispensing compartment 15 by the discharge auger 19 through the discharge outlet 16.

While the method according to the invention for preparing a batch of animal feed from a plurality of ingredients has been described for use with a specific type of mixer/feeder apparatus, namely, the mixer/feeder wagon 1, the method according to the invention may be used in conjunction with any other suitable type of mixer/feeder apparatus, be it a trailable mixer/feeder wagon, a self-powered mixer/feeder wagon, or a stationary mixer/feeder apparatus, of the type which would be ground mounted.

It is also envisaged that the method according to the invention for preparing a batch of animal feed from a plurality of ingredients may be used in conjunction with a mixer/feeder apparatus which does not include chopping blades, for example, a mixer/feeder wagon of the type disclosed in British Patent Specification No. 2,139,911. In which case, the mixing cycle would require a larger number of revolutions of the paddle mixer, and in particular, the fibrous ingredients may require to be subjected to a larger number of revolutions of the paddle mixer. However, in certain cases, where the mixer/feeder apparatus does not include a chopping function during mixing of the ingredients in the mixing compartment, pre-chopping of some of the fibrous ingredients of which the fibres are of relatively long lengths may be required.

While specific examples of batches of animal feed have been described, it will be readily apparent to those skilled in the art that the method according to the invention for preparing a batch of animal feed from a plurality of ingredients may be used with any other suitable ingredients for producing any other suitable batches of animal feed. Needless to say, the number of counts of revolutions of the paddle mixer which constitutes a mixing cycle will vary, depending on the ingredients of the batches of animal feed, the type of mixer/feeder apparatus and the type of the animals to be fed, and the counts of the revolutions of the paddle mixer from the commencement of the mixing cycle will also vary depending on the ingredients of the batch of animal feed, the type of mixer/feeder apparatus and the type of the animals to be fed.

While the instants at which the respective ingredients are to be loaded into the mixing compartment from the commencement of the mixing cycle have been identified as being respective counts of revolutions of the paddle mixer from the commencement of the mixing cycle, the instants could be time defined if desired. However, by defining the instants at which the ingredients are to be loaded into the mixing compartment by the count of revolutions of the paddle mixer from the commencement of the mixing cycle, a more accurate mixing regime is defined, since the speed at which the rotor rotates may not be constant, and may vary from batch to batch, depending on the speed of the power takeoff shaft of the tractor or towing vehicle from which drive is provided to the paddle mixer. Additionally, the duration of the mixing cycle may be time defined, instead of being defined as a function of the number of revolutions of the paddle mixer.

While the alerting means has been described as being provided by both a strobe light and a siren, any other suitable alerting means may be provided, and in certain cases, it is envisaged that the alerting means may be provided by flashing of the visual display screen only. In other cases, it is envisaged that only one of the siren and strobe light may be provided, which preferably would be the siren.

While the device 50 according to the invention has been described for storing the ingredients and the weights thereof for producing an animal feed ration for one animal together with the mixing regime for the batch of animal feed, it is envisaged that particulars and the mixing regime of many different animal feed rations for producing many different batches of animal feed, for the same or different animals, and/or for use in different seasons, may be stored in the device 50, and particulars of the appropriate batch and its mixing regime would be selected by inputting an appropriate select signal through the keypad of the device 50. Typically, the batches could be identified and selected by numbers.

It is also envisaged that in certain cases, the mixing cycle complete signal which is outputted by the device 50 may be adapted and coupled to an appropriate part of the drive transmission of the mixer/feeder wagon 1 for disengaging the paddle mixer 17 from the drive, in order to stop rotation of the paddle mixer at the end of the mixing cycle. For example, the paddle mixer may be driven by the drive transmission through a clutch, which would be disengaged in response to the mixing cycle complete signal from the device 50.

While the device 50 has been described for storing the actual weights of the respective ingredients of a batch of animal feed loaded into the mixing compartment, together with the mixing regime to which the ingredients of the batch of animal feed were subjected for subsequent analysis and comparison, while this is preferable and is particularly advantageous, in some embodiments of the invention the device 50 may be provided without such a storing function.

Additionally, while the mixing rotor has been described as comprising a particular type of paddle mixer, any other suitable paddle mixer, and indeed, any other suitable mixing rotor may be provided.

Additionally, while the mixer/feeder wagon has been described as comprising a dispensing compartment and a dispensing auger, the dispensing compartment and the dispensing auger may be omitted.

While the monitoring means for monitoring the operation of the mixing rotor has been described as being a proximity sensor for effectively directly monitoring the rotation of the mixing rotor by monitoring the rotation of the third sprocket, it will be appreciated that any suitable means for monitoring the rotation of the mixing rotor may be used. Needless to say, it will be appreciated that where a proximity sensor is used, the proximity sensor may be used to monitor the rotation of any of the shafts or sprockets of the drive transmission, and the resulting value would be modified to take account of the gear ratio between the rotational speed of the mixing rotor and the shaft or sprocket or other component of the drive transmission, the rotation of which would be monitored.

## Claims

1. A method for preparing a batch of animal feed from a plurality of ingredients requiring respective predefined mixing periods during a mixing cycle in a mixer/feeder apparatus (1) of the type comprising a mixing compartment (14) within which a mixing rotor (17) is rotatably mounted for mixing the ingredients therein, the method comprising selecting the ingredient requiring the largest predefined mixing period and loading the ingredient requiring the largest predefined mixing period into the mixing compartment (14) at the commencement of the mixing cycle, and subsequently loading the remaining ingredients into the mixing compartment (14), **characterised in that** the duration of the mixing cycle is determined as the predefined mixing period required by the selected ingredient requiring the largest predefined mixing period, a plurality of instants are determined at which the respective remaining ingredients are to be loaded into the mixing compartment (14) of the mixer/feeder apparatus (1) during the mixing cycle, each instant of the respective determined instants being determined so that the remaining duration of the mixing cycle at that instant is substantially equal to the predefined mixing period of the corresponding ingredient, and the remaining ingredients are loaded into the mixing compartment (14) at the respective corresponding determined instants during the mixing cycle.

2. A method as claimed in any preceding claim **characterised in that** the commencement of the mixing cycle is determined as being the commencement of loading of the ingredient requiring the largest predefined number of revolutions of the mixing rotor (17) into the mixing compartment (14).

3. A method as claimed in Claim 1 or 2 **characterised in that** each determined instant is determined as a function of a duration from the commencement of the mixing cycle.

4. A method as claimed in any preceding claim **characterised in that** the duration of the mixing cycle is determined as a function of the operation of the mixing rotor (17), and each determined instant at which one of the ingredients is to be loaded into the mixing compartment (14) is determined as a function of the operation of the mixing rotor (17).

5. A method as claimed in Claim 4 **characterised in that** the duration of the mixing cycle is determined as a function of a number of revolutions of the mixing rotor (17), and each determined instant at which the corresponding one of the ingredients is to be loaded into the mixing compartment (14) is determined as a function of a number of revolutions of the mixing rotor (17) from the commencement of the mixing cycle, and the count of the revolutions of the mixing rotor (17) of the mixing cycle commences at the commencement of loading of the ingredient requiring the largest predefined number of revolutions of the mixing rotor (17) into the mixing compartment (14).

6. A method as claimed in any preceding claim **characterised in that** the ingredient which is to be subjected to the largest predefined mixing period is a fibrous ingredient.

7. A method as claimed in Claim 6 **characterised in that** the fibrous ingredient of the batch of animal feed is subjected to chopping in the mixing compartment (14) during mixing thereof in order to reduce the length of the fibres of the fibrous ingredient to lie in the range of 25mm to 100mm.

8. A method as claimed in Claim 6 or 7 **characterised in that** the predefined mixing period to which the fibrous ingredient is to be subjected lies in the range of 30 revolutions to 300 revolutions of the mixing rotor (17).

9. A method as claimed in any of Claims 6 to 8 **characterised in that** the predefined mixing period to which the fibrous ingredient is to be subjected lies in the range of 100 revolutions to 200 revolutions of the mixing rotor (17).

10. A method as claimed in any preceding claim **characterised in that** the ingredients of the batch of animal feed comprises one or more of the following ingredients:
long cut grass silage,
short cut grass silage,
maize silage,
hay,
straw,
soda grain,
a nutritional additive,
a nutritional concentrate,
an energy additive, and
an energy concentrate.

11. A method as claimed in any preceding claim **characterised in that** the instants at which the respective ingredients are to be loaded into the mixing compartment (14) are determined to allow for a loading period during which each ingredient is being loaded into the mixing compartment (14).

12. A method as claimed in any preceding claim **characterised in that** one of a visually perceptible and an aurally perceptible signal is produced to indicate one or more of the following:
the instants at which the respective ingredients are to be loaded into the mixing compartment (14) during the mixing cycle,
the end of the mixing cycle,
the imminent approach of the end of the mixing cycle,
when the weight of each ingredient loaded into the mixing compartment (14) is equal to a required weight of that ingredient to prepare the batch of animal feed,
the imminent completion of loading of each ingredient into the mixing compartment (14).

13. A method as claimed in any preceding claim **characterised in that** the weight of the respective ingredients in the mixing compartment (14) is monitored during loading of the ingredients therein, and the number of revolutions of the mixing rotor (17) are monitored during the mixing cycle.

14. A method as claimed in Claim 13 **characterised in that** a device (50) is provided for determining the instants at which the respective ingredients are to be loaded into the mixing compartment (14) in response to monitoring of the mixing rotor (17).

15. A method as claimed in any preceding claim **characterised in that** the mixing rotor (17) with which the ingredients of the batch of animal feed are mixed in the mixing compartment (14) is a paddle mixer (17).

## Patentansprüche

1. Verfahren zum Zubereiten einer Tierfuttercharge aus mehreren Zutaten, die während eines Mischzyklus in einer Misch- und Zuführeinrichtung (1) des Typs mit einer Mischkammer (14), in der ein Mischrotor (17) zum Mischen der darin befindlichen Zutaten drehbar angebracht ist, entsprechend vorbestimmte Mischzeiten erfordern, wobei das Verfahren umfasst ein Auswählen der Zutat, die die längste vorbestimmte Mischdauer erfordert, und ein Beschicken der Mischkammer (14) mit der die längste vorbestimmte Mischdauer erfordernden Zutat zum Beginn des Mischzyklus, und ein anschließendes Beschicken der Mischkammer (14) mit den verbleibenden Zutaten,
**dadurch gekennzeichnet, dass** die Zeitdauer des Mischzyklus bestimmt wird als die vorbestimmte Mischdauer, die für die die längste vorbestimmte Mischdauer erfordernde ausgewählte Zutat erforderlich ist, dass mehrere Zeitpunkte ermittelt werden, zu denen die Mischkammer (14) der Misch- und Zuführeinrichtung (1) während des Mischzyklus mit den verbleibenden Zutaten zu beschicken ist, wobei jeder Zeitpunkt der entsprechenden ermittelten Zeitpunkte so ermittelt wird, dass die verbleibende Zeitdauer des Mischzyklus zu diesem Zeitpunkt im Wesentlichen der vorbestimmten Mischdauer der zugehörigen Zutat entspricht, und die verbleibenden Zutaten der Mischkammer (14) während des Mischzyklus zu den entsprechenden, zugehörigen ermittelten Zeitpunkten zugeführt werden.

2. Verfahren nach dem vorgehenden Anspruch,
**dadurch gekennzeichnet, dass** der Beginn des Mischzyklus bestimmt wird als der Beginn des Beschickens der Mischkammer (14) mit der Zutat, die die größte vorbestimmte Anzahl an Umdrehungen des Mischrotors (17) erfordert.

3. Verfahren nach Anspruch 1 oder 2,
**dadurch gekennzeichnet, dass** jeder ermittelte Zeitpunkt als eine Funktion einer Zeitdauer ab dem Beginn des Mischzyklus ermittelt wird.

4. Verfahren nach einem der vorhergehenden Ansprüche,
**dadurch gekennzeichnet, dass** die Zeitdauer des Mischzyklus ermittelt wird als eine Funktion des Betriebs des Mischrotors (17), und dass jeder ermittelte Zeitpunkt, zu dem die Mischkammer (14) mit einer der Zutaten zu beschicken ist, als eine Funktion des Betriebs des Mischrotors (17) ermittelt wird.

5. Verfahren nach Anspruch 4,
**dadurch gekennzeichnet, dass** die Zeitdauer des Mischzyklus ermittelt wird als eine Funktion einer Anzahl von Umdrehungen des Mischrotors (17), und dass jeder ermittelte Zeitpunkt, zu dem die Mischkammer (14) mit einer zugehörigen der Zutaten zu beschicken ist, als eine Funktion einer Anzahl von Umdrehungen des Mischrotors (17) ab dem Beginn des Mischzyklus ermittelt wird, und die Zählung der Umdrehungen des Mischrotors (17) des Mischzyklus zum Beginn des Beschickens der Mischkammer (14) derjenigen Zutat anfängt, die die größte vorbestimmte Anzahl von Umdrehungen des Mischrotors (17) benötigt.

6. Verfahren nach einem der vorhergehenden Ansprüche,
**dadurch gekennzeichnet, dass** die Zutat, die der längsten vorbestimmte Mischdauer zu unterziehen ist, eine faserförmige Zutat ist.

7. Verfahren nach Anspruch 6,
**dadurch gekennzeichnet, dass** die faserförmige Zutat der Tierfuttercharge während des Mischens derselben einem Häckseln in der Mischkammer (14) unterzogen wird, um die Länge der Fasern der faserförmigen Zutat so zu verringern, dass sie in dem Bereich von 25mm bis 100mm liegen.

8. Verfahren nach Anspruch 6 oder 7,
**dadurch gekennzeichnet, dass** die vorbestimmte Mischdauer, der die faserförmige Zutat zu unterziehen ist, in dem Bereich von 30 Umdrehungen bis 300 Umdrehungen des Mischrotors (17) liegt.

9. Verfahren nach einem der Ansprüche 6 bis 8,
**dadurch gekennzeichnet, dass** die vorbestimmte Mischdauer, der die faserförmige Zutat zu unterziehen ist, in dem Bereich von 100 Umdrehungen bis 200 Umdrehungen des Mischrotors (17) liegt.

10. Verfahren nach einem der vorhergehenden Ansprüche,
**dadurch gekennzeichnet, dass** die Zutaten der Tierfuttercharge eine oder mehrere der folgenden Zutaten umfassen:
langgeschnittene Grassilage,
kurzgeschnittene Grassilage,
Maissilage,
Heu,
Stroh,
Sodakörner,
ein Nährstoffadditiv,
ein Nährstoffkonzentrat,
einen Energiezusatzstoff, und
ein Energiekonzentrat.

11. Verfahren nach einem der vorhergehenden Ansprüche,
**dadurch gekennzeichnet, dass** die Zeitpunkte, zu denen die Mischkammer (14) mit den entsprechenden Zutaten zu beschicken ist, so bestimmt werden, dass eine Beschickungsdauer berücksichtigt ist, während derer die Mischkammer (14) mit jeder Zutat beschickt wird.

12. Verfahren nach einem der vorhergehenden Ansprüche,
**dadurch gekennzeichnet, dass** ein visuell wahrnehmbares und/oder ein hörbares Signal erzeugt wird, um eines oder mehreres des Folgenden anzugeben:
die Zeitpunkte, zu denen die Mischkammer (14) während des Mischzyklus mit den entsprechenden Zutaten zu beschicken ist,
das Ende des Mischzyklus,
das unmittelbar bevorstehende Ende des Mischzyklus,
wenn das Gewicht jeder in die Mischkammer (14) zugeführten Zutat einem erforderlichen Gewicht dieser Zutat zum Zubereiten der Tierfuttercharge entspricht,
der bevorstehende Abschluss einer Beschickung der Mischkammer (14) mit jeder Zutat.

13. Verfahren nach einem der vorhergehenden Ansprüche,
**dadurch gekennzeichnet, dass** das Gewicht der entsprechenden Zutaten in der Mischkammer (14) während ihres Beschickens mit den Zutaten überwacht wird, und dass die Anzahl von Umdrehungen des Mischrotors (17) während des Mischzyklus überwacht wird.

14. Verfahren nach Anspruch 13,
**dadurch gekennzeichnet, dass** eine Vorrichtung (50) zum Ermitteln der Zeitpunkte vorhanden ist, zu denen die Mischkammer (14) in Reaktion auf das Überwachen des Mischrotors (17) mit den entsprechenden Zutaten zu beschicken ist.

15. Verfahren nach einem der vorhergehenden Ansprüche,
**dadurch gekennzeichnet, dass** der Mischrotor (17), mit dem die Zutaten der Tierfuttercharge in der Mischkammer (14) gemischt werden, ein Balkenrührer (17) ist.

## Revendications

1. Procédé de préparation d'un lot d'aliments pour animaux à partir d'une pluralité d'ingrédients nécessitant des périodes de mélange prédéfinies respectives pendant un cycle de mélange dans un appareil mélangeur/d'alimentation (1) du type comprenant un compartiment de mélange (14) à l'intérieur duquel un rotor de mélange (17) est monté en rotation pour mélanger les ingrédients dans celui-ci, le procédé comprenant le fait de sélectionner l'ingrédient nécessitant la plus grande période de mélange prédéfinie et de charger l'ingrédient nécessitant la plus grande période de mélange prédéfinie dans le compartiment de mélange (14) au début du cycle de mélange, et de charger par la suite les ingrédients restants dans le compartiment de mélange (14),
**caractérisé en ce que** la durée du cycle de mélange est déterminée comme étant la période de mélange prédéfinie requise par l'ingrédient sélectionné nécessitant la plus grande période de mélange prédéfinie, une pluralité d'instants sont déterminés auxquels les ingrédients restants respectifs doivent être chargés dans le compartiment de mélange (14) de l'appareil mélangeur/d'alimentation (1) pendant le cycle de mélange, chaque instant des instants déterminés respectifs étant déterminé de sorte que la durée restante du cycle de mélange à cet instant soit substantiellement égale à la période de mélange prédéfinie de l'ingrédient correspondant, et les ingrédients restants sont chargés dans le compartiment de mélange (14) aux instants déterminés correspondants respectifs pendant le cycle de mélange.

2. Procédé tel que revendiqué dans l'une des revendications précédentes, **caractérisé en ce que** le début du cycle de mélange est déterminé comme étant le début de chargement de l'ingrédient nécessitant le plus grand nombre prédéfini de révolutions du rotor de mélange (17) dans le compartiment de mélange (14).

3. Procédé tel que revendiqué dans la revendication 1 ou 2, **caractérisé en ce que** chaque instant déterminé est déterminé en fonction d'une durée depuis le début du cycle de mélange.

4. Procédé tel que revendiqué dans l'une des revendications précédentes, **caractérisé en ce que** la durée du cycle de mélange est déterminée en fonction du fonctionnement du rotor de mélange (17), et chaque instant déterminé auquel l'un des ingrédients doit être chargé dans le compartiment de mélange (14) est déterminé en fonction du fonctionnement du rotor de mélange (17).

5. Procédé tel que revendiqué dans la revendication 4, **caractérisé en ce que** la durée du cycle de mélange est déterminée en fonction d'un nombre de révolutions du rotor de mélange (17), et chaque instant déterminé auquel l'ingrédient correspondant parmi les ingrédients doit être chargé dans le compartiment de mélange (14) est déterminé en fonction d'un nombre de révolutions du rotor de mélange (17) dès le début du cycle de mélange, et le comptage des révolutions du rotor de mélange (17) du cycle de mélange commence au début de chargement de l'ingrédient nécessitant le plus grand nombre prédéfini de révolutions du rotor de mélange (17) dans le compartiment de mélange (14).

6. Procédé tel que revendiqué dans l'une des revendications précédentes, **caractérisé en ce que** l'ingrédient qui doit être soumis à la plus grande période de mélange prédéfinie est un ingrédient fibreux.

7. Procédé tel que revendiqué dans la revendication 6, **caractérisé en ce que** l'ingrédient fibreux du lot d'aliments pour animaux est soumis à un hachage dans le compartiment de mélange (14) pendant le mélange de celui-ci afin de réduire la longueur des fibres de l'ingrédient fibreux de manière à ce qu'elle se trouve dans la plage allant de 25 mm à 100 mm.

8. Procédé tel que revendiqué dans la revendication 6 ou 7, **caractérisé en ce que** la période de mélange prédéfinie à laquelle l'ingrédient fibreux doit être soumis se trouve dans la plage allant de 30 révolutions à 300 révolutions du rotor de mélange (17).

9. Procédé tel que revendiqué dans l'une des revendications 6 à 8, **caractérisé en ce que** la période de mélange prédéfinie à laquelle l'ingrédient fibreux doit être soumis se trouve dans la plage allant de 100 révolutions à 200 révolutions du rotor de mélange (17).

10. Procédé tel que revendiqué dans l'une des revendications précédentes, **caractérisé en ce que** les ingrédients du lot d'aliments pour animaux comprennent un ou plusieurs ingrédient(s) parmi les ingrédients suivants :
un ensilage d'herbe à coupe longue,
un ensilage d'herbe à coupe courte,
un ensilage de maïs,
du foin,
de la paille,
de la soude caustique en grains,
un additif nutritionnel,
un concentré nutritionnel,
un additif énergétique, et
un concentré énergétique.

11. Procédé tel que revendiqué dans l'une des revendications précédentes, **caractérisé en ce que** les instants auxquels les ingrédients respectifs doivent être chargés dans le compartiment de mélange (14) sont déterminés pour permettre une période de chargement pendant laquelle chaque ingrédient est en train d'être chargé dans le compartiment de mélange (14).

12. Procédé tel que revendiqué dans l'une des revendications précédentes, **caractérisé en ce que** l'un d'un signal perceptible visuellement et d'un signal perceptible auditivement est produit pour indiquer un ou plusieurs élément(s) parmi les éléments suivantes :
les instants auxquels les ingrédients respectifs doivent être chargés dans le compartiment de mélange (14) pendant le cycle de mélange,
la fin du cycle de mélange,
l'approche imminente de la fin du cycle de mélange,
lorsque le poids de chaque ingrédient chargé dans le compartiment de mélange (14) est égal à un poids requis de cet ingrédient pour préparer le lot d'aliments pour animaux,
l'achèvement imminent de chargement de chaque ingrédient dans le compartiment de mélange (14).

13. Procédé tel que revendiqué dans l'une des revendications précédentes, **caractérisé en ce que** le poids des ingrédients respectifs dans le compartiment de mélange (14) est surveillée pendant le chargement des ingrédients dans celui-ci, et le nombre de révolutions du rotor de mélange (17) est surveillé pendant le cycle de mélange.

14. Procédé tel que revendiqué dans la revendication 13, **caractérisé en ce qu'**un dispositif (50) est prévu pour déterminer les instants auxquels les ingrédients respectifs doivent être chargés dans le compartiment de mélange (14) en réponse à la surveillance du rotor de mélange (17).

15. Procédé tel que revendiqué dans l'une des revendications précédentes, **caractérisé en ce que** le rotor de mélange (17) avec lequel les ingrédients du lot d'aliments pour animaux sont mélangés dans le compartiment de mélange (14) est un mélangeur à pales (17).
